# EUROPEAN PATENT APPLICATION

(11) **EP 2 479 647 A1**
(43) Date of publication of application: **25.07.2012**
(21) Application number: 11151940.1
(22) Date of filing: 25.01.2011
(51) Int. Cl.: G06F 3/023, G06F 9/44

(54) **Active command line driven user interface**

(71) Applicant: Research In Motion Limited, Waterloo, ON N2L 3W8 (CA)
(72) Inventor: Bowman, Gordon Gregory, Kanata ON K2K 2A5 (CA); Ngo, Ngoc Bich, Kanata ON K2K 2A5 (CA)
(74) Representative: Patel, Binesh

(57) **Abstract**

A method of interacting with an electronic device and an electronic device so configured are described. In accordance with one embodiment, there is provided a method of interacting with an electronic device. A command line having an input field is displayed on a display of the electronic device. An input string is received in the input field. The input string is disambiguated into one or more commands which match the input string. Each matching command is displayed on the display each as an entry in a command list. In some embodiments, each entry in the command list is selectable in response to selection input.

## Description

### TECHNICAL FIELD

The present disclosure relates to electronic devices, and in particular to a method of interacting with an electronic device.

### BACKGROUND

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth^{™} capabilities.

Portable electronic devices such as PDAs or smart telephones are generally intended for handheld use and ease of portability. Smaller devices are generally desirable for portability. The information displayed on the portable electronic devices may be modified depending on the functions and operations being performed.

Graphical user interfaces (GUIs) provided by portable electronic devices are often menu-driven rather than command-driven. Menu-driven applications provide a list of possible action commands from which a user may choose, while command-driven applications require users to enter explicit commands. Menus may be implemented as a list of textual or graphical choices (i.e., menu items) from which a user may choose by selecting a menu item. Selection of a menu item typically causes an action command to be performed, or causes another menu, or submenu, to be displayed. Hierarchical menus provide a parent menu with selectable submenu items. Each submenu is typically displayed next to its parent menu and has additional menu choices that are related to the selected parent menu item. The depth of a hierarchical menu may extend in this manner to many levels of submenus.

Interacting with a portable electronic device using menus and submenus may be complex and time consuming, particularly for users new to the portable electronic device. Additionally, GUIs having more complex menu structures are more resource intensive for portable electronic devices, requiring more processing resources and more power. Improvements in methods of interacting with electronic devices are desirable.

### BRIEF DESCRIPTION OF THE DRAWINGS

Figure 1 is a simplified block diagram of components including internal components of a portable electronic device suitable for carrying out the example embodiments of the present disclosure;

Figure 2 is a front view of an example of a portable electronic device in a portrait orientation;

Figure 3 is a flowchart illustrating an example method of interacting with a portable electronic device in accordance with one example embodiment of the present disclosure;

Figure 4 is a flowchart illustrating an example method of interacting with a portable electronic device in accordance with another example embodiment of the present disclosure;

Figures 5 and 6 are screen captures illustrating the operation of command aliases in the operation of the command line in accordance with one embodiment of the present disclosure;

Figures 7 and 8 are screen captures illustrating the operation of an autocomplete function of the command line in accordance with one embodiment of the present disclosure;

Figures 9 and 10 are screen captures illustrating the operation of a Translate command in accordance with one embodiment of the present disclosure;

Figures 11 to 13 are screen captures further illustrating the operation of an autocomplete function of the command line in accordance with one embodiment of the present disclosure;

Figure 14 is a screen capture illustrating the operation of ambiguity resolution between connectors and command parameters in the operation of the command line in accordance with one embodiment of the present disclosure;

Figure 15 is a screen capture illustrating the operation of a Find command in accordance with one embodiment of the present disclosure;

Figure 16 is a screen capture illustrating the operation of a Memo command in accordance with one embodiment of the present disclosure;

Figures 17 to 21 are screen captures illustrating the operation of a Call command in accordance with one embodiment of the present disclosure;

Figures 22 and 23 are screen captures illustrating the operation of a SMS command in accordance with one embodiment of the present disclosure; and

Figures 24 to 31 are screen captures illustrating the operation of an Appointment command in accordance with one embodiment of the present disclosure.

### DETAILED DESCRIPTION OF EXAMPLE EMBODIMENTS

The present disclosure provides an active command line driven user interface (UI) for an electronic device, such as a portable electronic device. The command driven UI is a language-based UI which performs commands or actions on the electronic device. The active command line provides an alternative to a ribbon or menu hierarchy in the UI which a user must navigate to locate an appropriate application, launch that application and navigate its menus and fields to perform actions. The processing and memory demands of ribbon and hierarchical menu-driven user interfaces may be demanding on host electronic devices, requires that users learn how to use the user interface of multiple applications and, once learned, requires a lot of interaction to invoke a desired action. The active command line driven user interface allows multiple applications on the electronic device to be controlled via the active command line. The active command line is more intuitive than conventional command lines because it is more like natural language, making the UI easier and faster than conventional command lines or directly interacting with supported applications using their individual UIs.

The active command line provided by the present disclosure may be configured to control most, if not all, device applications on an electronic device. The intuitive nature of the active command line, described below, requires minimal learning and effort and obviates the need for users to have foreknowledge of commands and command parameters which are to be specified in the command line. The active command line allows an application action (sometimes referred to as tasks) to be performed without launching the respective application and without having to navigate to the icon and clicking to launch. This active command line user interface provides a visual drop down list that displays the available commands matching input in the command line and optionally context-sensitive information. The visual drop down list may include selections, option values, hints for command and command parameter inputs and/or dynamically suggest values of objects to be acted upon by the command. The dynamic nature of the command line and visual drop down list which accompanies the command line is advantageous over conventional command lines.

The active command line and the visual drop down list which accompanies the command line provided by the present disclosure also provides an option to perform actions on an electronic device that provides direct execution without the need for ribbon/menu navigation, selection and traversal. Even relatively complex actions may be defined in a command supported by the active command line and repeatedly re-executed quickly, making use of the electronic device faster than menu navigation in appropriate circumstances and more intuitive than a conventional command line UI.

In accordance with one embodiment of the present disclosure, there is provided a method of interacting with an electronic device. A command line having an input field is displayed on a display of the electronic device. An input string is received in the input field. The input string is disambiguated into one or more commands which match the input string. Each matching command is displayed on the display each as an entry in a command list. In some embodiments, each entry in the command list is selectable in response to selection input.

The method may further comprise automatically completing a command parameter of at least one of the one or more commands based predetermined criteria. Each matching command is displayed in the command list on the display as an entry with any automatically completed (auto-completed) command parameter.

The automatically completing may comprise automatically completing a command parameter based on a default value for the command parameter in the absence of input for the command parameter in the input field.

The automatically completing may comprise automatically completing a command parameter based on input in the input field and a set of allowed values for command parameter.

The automatically completing may comprise automatically completing a command parameter based on input in the input field and a set of available values for command parameter.

The automatically completing may comprise automatically completing a command parameter with a value from a data source accessible to the electronic device. The command parameter may be automatically completed with the value from a data object stored on the electronic device when the input in the input field matches data in the data object. When the command operates upon one or more particular data object types, the command parameter may be automatically completed with the name from a data object of the one or more particular data object types which the command operates upon. When the command parameter operates upon one or more particular data object types, the command parameter may be automatically completed with the name from a data object of the one or more particular data object types which the command operates parameter upon.

The automatically completing may comprise automatically completing a date command parameter with a current date.

The automatically completing may comprise automatically completing a time command parameter with a current time.

The automatically completing may comprise automatically completing a command parameter based on a value of a prior command parameter.

The method may further comprise automatically completing a command name being input in the input field with a selected command in the command list in response to selection input when the command name is selected.

In accordance with another embodiment of the present disclosure, there is provided another method of interacting with an electronic device. A command line having an input field is displayed on a display of the electronic device. Commands are filtered in accordance with context information to produce one or more commands which match the context information. Each matching command is displayed on the display each as an entry in a command list. In some embodiments, each entry in the command list is selectable in response to selection input. In some embodiments, the command line is invokable and the context information comprises selected text in a user interface screen displayed on the display from which the command line was invoked. In some embodiments, the command line is invokable and the context information comprises an application which was active when the command line was invoked.

In accordance with a further embodiment of the present disclosure, there is provided an electronic device. The electronic device comprises a processor and a display electrically coupled to the processor. The electronic device, for example via the processor, is configured for performing the method(s) set forth herein.

In accordance with yet a further embodiment of the present disclosure, there is provided a computer program product. The computer program product comprises a computer readable medium having stored thereon computer program instructions for implementing a method on an electronic device. The computer executable instructions comprises instructions for performing the method(s) set forth herein.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, tablet computing devices, and so forth. The portable electronic device may also be a portable electronic device with or without wireless communication capabilities, such as a handheld electronic game device, digital photograph album, digital camera, or other device.

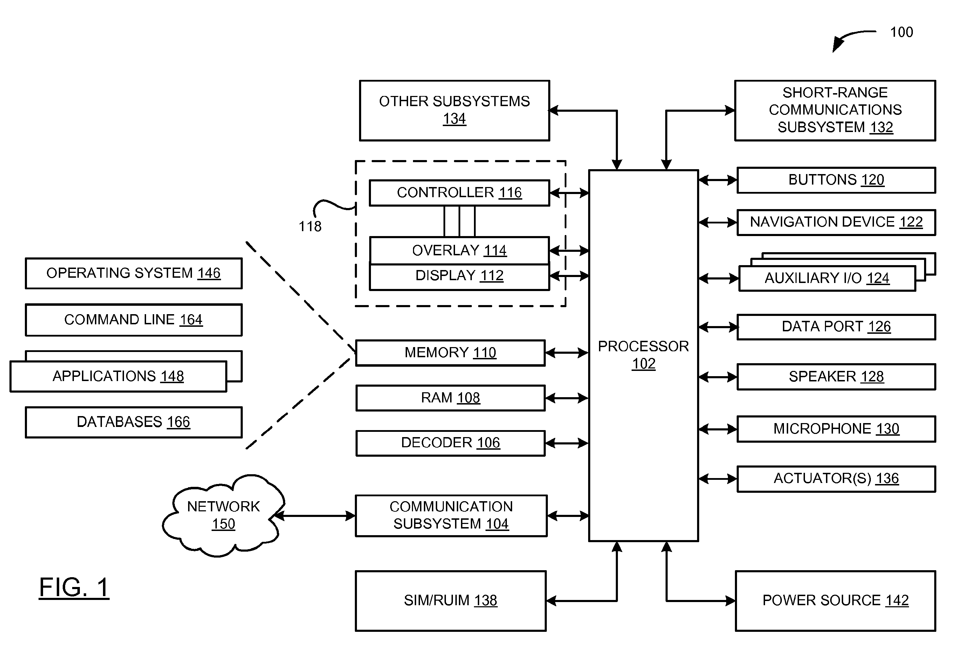

A block diagram of an example of a portable electronic device 100 is shown in Figure 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 (such as a liquid crystal display (LCD)), one or more keys or buttons 120, a navigation device 122, one or more auxiliary input/output (I/O) subsystems 124, a data port 126, a speaker 128, a microphone 130, short-range communications subsystem 132, other device subsystems 134, and one or more actuator(s) 136. The display 112 may be operably connected with a touch-sensitive overlay 114 and an electronic controller 116 that together comprise a touch-sensitive display 118. User-interaction with a graphical user interface (GUI) may be performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer (not shown) that may be utilized to detect direction of gravitational forces or gravity-induced reaction forces.

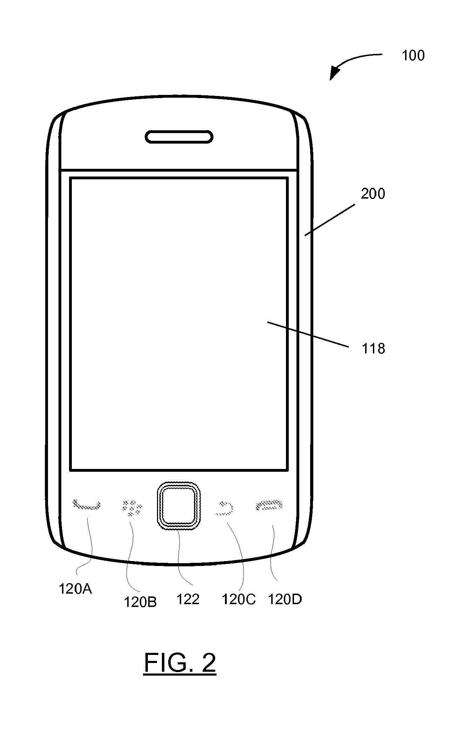

The buttons 120, represented individually by references 120A, 120B, 120C and 120D in Figure 2, may be located below the touch-sensitive display 118 on a front face of the portable electronic device 100. The buttons 120 generate corresponding input signals when activated. The buttons 120 may be constructed using any suitable button (or key) construction such as, for example, a dome-switch construction. The actions performed by the device 100 in response to activation of respective buttons 120 are context-sensitive. The action performed depends on a context that the button was activated. The context may be, but is not limited to, a device state, application, screen context, selected item or function, or any combination thereof.

The navigation device 122 may be a depressible (or clickable) joystick such as a depressible optical joystick, a depressible trackball, a depressible scroll wheel, or a depressible touch-sensitive trackpad or touchpad. Figure 2 shows the navigation device 122 in the form of a depressible optical joystick. The auxiliary I/O subsystems 124 may include other input devices such as a keyboard and/or keypad (neither of which is not shown). In some embodiments, a conventional a non-touch-sensitive display, such as an LCD screen, may be provided instead of the touch-sensitive display 118 along with a keyboard and/or keypad.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146, software applications (or programs) 148 that are executed by the processor 102, and data which are typically stored in a persistent, updatable store such as the memory 110. Additional applications or programs 148 may be loaded onto the portable electronic device 100 through the wireless network 150, the auxiliary I/O subsystem 124, the data port 126, the short-range communications subsystem 132, or any other suitable subsystem 134.

The applications 148 may include, but are not limited to, any one or combination of the following: an address book, a calendar application for scheduling appointments, a browser for browsing Web content or other content, a calculator, one or more Internet search applications such as a Bing^{™} application, Google^{™} application or Yahoo^{™} application, each of which may be a plug-in or otherwise built-in to the browser application, an encyclopaedia or other specialized database search application such as IMDB^{™} (Internet Movie Database) or Wikipedia^{™}, a dictionary, a thesaurus, a translator, a mapping application, a media player application for viewing images, playing audio and/or playing video, an email application for email messaging, an instant messaging (IM) application for instant messaging, a text messaging application for text messaging such as SMS (Short Message Service) or Multimedia Messaging Service (MMS) messaging, a device-to-device messaging application (sometimes known as PIN (personal identification number) messaging application), a phone application, task application, memo application or a local search application for searching local data stored on the portable electronic device 100. A personal information manager (PIM) application which integrates some of the above applications, such as the messaging applications, calendar applications, task and memo applications, may be provided instead of individual applications in some embodiments.

The applications 148 include a command line application 164 which interacts with the operating system 146 and other applications 148 on the the portable electronic device 100 using application programming interfaces (APIs) implemented by the operating system 146 and the respective applications 148. The command line application 164 can interact with the operating system 146 and at least some of the other applications, possibly all of the other applications 148. The operating system 146 and applications 148 each use its own API for interacting with the command line application 164. The API are used by the command line application 164 to determine the respective vocabularies and calling conventions and are used to access respective services. The APIs may include specifications for routines, data structures, data object classes and protocols.

APIs may be provided for each command of the operating system 146 or application 148 supported by the command line application 164. For example, APIs may be provided to create appointments, memos, tasks, launch apps, view media files, etc. The command line application 164, in response to designated input, causes actions to be performed by the portable electronic device 100 using APIs.

The data stored on the portable electronic device 100 may be organized, at least partially, into a number of databases 166 each containing data objects of the same type, each associated with the same application 148, or both. For example, data objects such as email messages, instant messages (IMs), text messages, memos, tasks, media files, browser history, locations, and point of interests (POIs) such as businesses may be stored in individual databases within the memory 110. The application(s) 148 associated with each database 166 is stored, for example in a data table, and accessible to the command line application 164 and other applications 148. The particular databases 166 resident on the portable electronic device 100 depends on the particular applications 148 and capabilities of the portable electronic device 100.

The command line application 164, using the APIs of the respective applications 148, can access and search for applications, contacts, emails, IMs, text messages, memos, tasks, media files, browser history, locations, and POIs, among other data objects.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data objects, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The actuator(s) 136 may be depressed or activated by applying sufficient force to the touch-sensitive display 118 to overcome the actuation force of the actuator 136. The actuator(s) 136 may be actuated by pressing anywhere on the touch-sensitive display 118. The actuator(s) 136 may provide input to the processor 102 when actuated. Actuation of the actuator(s) 136 may result in provision of tactile feedback for the touch-sensitive display 118. When force is applied, the touch-sensitive display 118 is depressible, pivotable, and/or movable. Such a force may actuate the actuator(s) 136.

A mechanical dome switch actuator may be utilized. In this example, tactile feedback is provided when the dome collapses due to imparted force and when the dome returns to the rest position after release of the switch.

Alternatively, the actuator 136 may comprise one or more piezoelectric elements that provide tactile feedback for the touch-sensitive display 118. Contraction of the piezoelectric actuators applies a spring-like force, for example, opposing a force externally applied to the touch-sensitive display 118. Each piezoelectric actuator includes a piezoelectric device, such as a Lead Zirconate Titanate (PZT) ceramic disc adhered to a substrate that may comprise metal and/or another flexible or elastically deformable material. The substrate bends when the piezoelectric device contracts due to build-up of charge/voltage at the piezoelectric device or in response to a force, such as an external fore applied to the touch-sensitive display 118. The charge/voltage on the piezoelectric device may be removed by a controlled discharge current that causes the piezoelectric device to expand, releasing the force thereby decreasing the force applied by the piezoelectric device. The charge/voltage may advantageously be removed over a relatively short period of time to provide tactile feedback. Absent an external force and absent a charge on the piezoelectric device, the piezoelectric device may be slightly bent due to a mechanical preload.

Optional force sensors may be disposed in conjunction with the touch-sensitive display 118 to determine or react to forces applied to the touch-sensitive display 118. The force sensor may be disposed in line with the piezoelectric of the actuator 136. The force sensors may be force-sensitive resistors, strain gauges, piezoelectric or piezoresistive devices, pressure sensors, quantum tunnelling composites, force-sensitive switches, or other suitable devices. Force as utilized throughout the specification, refers to force measurements, estimates, and/or calculations, such as pressure, deformation, stress, strain, force density, force-area relationships, thrust, torque, and other effects that include force or related quantities.

Figure 2 shows a front view of an example of a portable electronic device 100 in portrait orientation. The portable electronic device 100 includes a housing 200 that houses internal components including internal components shown in Figure 1 and frames the touch-sensitive display 118 such that the touch-sensitive display 118 is exposed for user-interaction therewith when the portable electronic device 100 is in use. It will be appreciated that the touch-sensitive display 118 may include any suitable number of user-selectable features rendered thereon, for example, in the form of virtual buttons for user-selection of, for example, applications, options, or keys of a keyboard for user entry of data during operation of the portable electronic device 100.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a centre of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. Multiple simultaneous touches may be detected.

### Active Command Line Driven User Interface

One example of an active command line driven user interface for the portable electronic device 100 in accordance with the present disclosure will now be described. The active command line driven user interface is implemented by the command line application 164 and may be used to control supported applications 148, at least in part. At least some of the applications 148 on the portable electronic device 100 are configured to be controlled with the active command line driven user interface. So called "supported" applications 148 may typically be accessed using their individual user interfaces even when configured to be controlled with the active command line driven user interface. At least some of the actions (or tasks) performed by supported applications 148 are executable or invokable by a corresponding command in the active command line driven user interface. To the extent possible, the commands supported by the active command line driven user interface may have the same name as the corresponding actions (or tasks) in the supported applications 148.

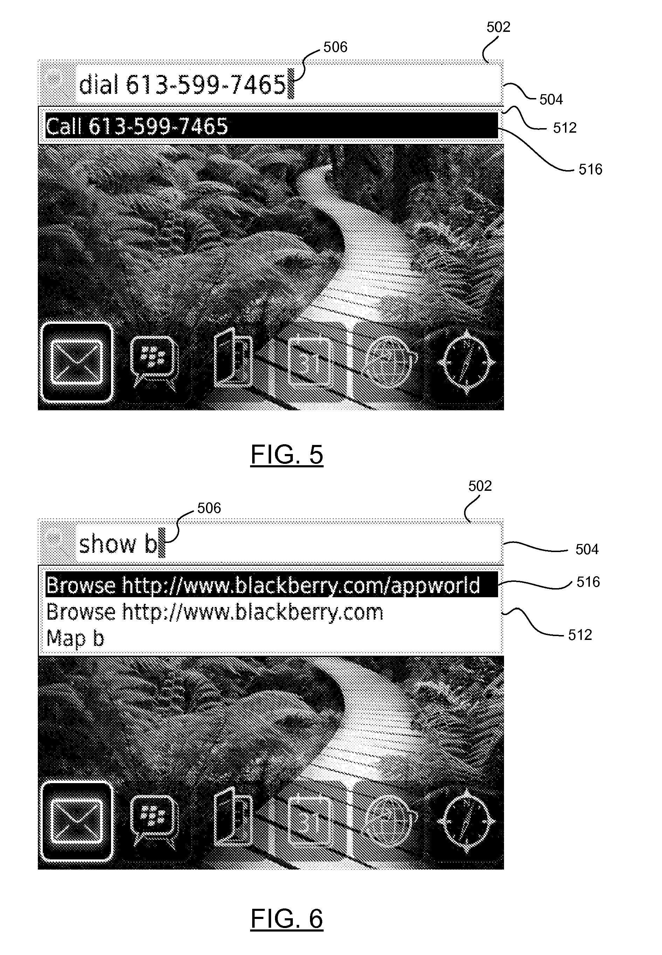

As shown for example in Figures 5 and 6, the active command line driven user interface provides a command line input area (command line) 504 which is accessible from a home screen 502 of the portable electronic device 100 which is displayable on its display 112. The active command line driven user interface may be called or invoked from any application 148 or user interface screen in response to corresponding input such as, for example, actuating a designated button or designated key (such as a convenience key on the side of the device 100 or the keyboard), selecting/activating a designated onscreen item selected via touching the touch-sensitive display 118, actuating the actuator 136 while touching the touch-sensitive display 118 at the location of the designated onscreen item, selecting a corresponding menu option, or other suitable input. The active command line driven user interface may even be called from an application 148 which is not supported by the active command line driven user interface. The command line 504 of the active command line driven user interface, when called or invoked, may be provided as an overlay which covers at least a portion of the currently displayed user interface screen.

The command line 504 includes an input field for receiving an input string and an onscreen caret or cursor 506 provided within the input field. The input string is text entered from an input device of the portable electronic device 100 such as a touch-sensitive display 118 or a keyboard. The active command line user interface also provides a command list 512 which is a list of commands (sometimes referred to as command entries or command strings) which match input provided in the input field and optionally context information for evaluating context-sensitive commands. The command list 512 is displayed with the command line 504, typically adjacent to or below the command line 504. The command list 512 in the shown examples comprises a visual drop down list located below the command line 504. When the number of matching commands in the list exceeds the number of displayable menu items in the command list 512, the command list 512 is provided as a scrollable area which may be scrolled up or down in response to corresponding up or down navigation input detected, for example, by the navigation device 122.

Matching commands may be presented in a format other than a list in other embodiments. The command list 512 also includes an onscreen selection indicator 516 (sometimes referred to as a caret, cursor or focus) which is navigable within the command list 512 to select one of the matching commands. Selecting typically comprises highlighting or focussing a matching command in the list with the onscreen position indicator 516 in response to detected navigation input, for example, in accordance with directional inputs detected by the navigation device 122, e.g. depressible optical joystick. The directional inputs may be caused by movements of the user's finger which are detected by the navigation device 122, or rotational movements of the navigation device 122 caused by the user's finger depending on the type of navigation device 122.

Highlighting or focusing a menu item (e.g., command entry) with the onscreen position indicator 516 causes the appearance of the menu item to be changed from a first visual state to a second visual state different from the first visual state. Changing the appearance of a menu item, in at least some embodiments, may comprise changing a colour of a background or field in which the menu item is located, the text of the menu item, or both.

A highlighted/selected command in the command list 512 may be executed or invoked in response to activation input received when the respective command in the command list 512 is highlighted/selected, or activation input received when the command line 504 is the active field. The activation input may be, for example, the actuation of an <ENTER> key of a keyboard of the portable electronic device 100, actuation of the navigation device 122, touching of a designated onscreen item displayed on the touch-sensitive display 118, actuation of the one or more actuators 136 by pressing the touch-sensitive display 118 for example, while touching of a designated onscreen item displayed on the touch-sensitive display 118, or other suitable input.

A command can only be executed or invoked when it has been fully defined. A command is fully defined when all the required command parameters has been defined, i.e., when a value has been provided (e.g., input) or set for all of the required command parameters. In some embodiments, default values may be used for some command parameters as described further below. In some embodiments, when values have been provided (e.g., input) for all of the required command parameters, a visual indication that activation input will now execute or invoke the command is provided. The visual indication may take any suitable form, such as, highlighting the command in the command list 512 in a predetermined color, or displaying a predetermined icon or text notification with the highlighted command in the command list 512. In other embodiments, the command does not execute unless values have been provided for all of the required command parameters but no visual indication is provided.

When the navigation device 122 is a depressible optical joystick, movements of the user's finger, such as vertical and horizontal movements, are detected by an optical sensor of the optical joystick. Up, down, left or right movements detected by the optical joystick are interpreted as corresponding up, down, left or right navigation commands and the onscreen position indicator 516 is moved from its initial location focusing one of the menu items in the command list 512 to a new location in the command list 512 focusing on a different one of the menu items. Typically, navigation via the optical joystick is by 1:1 movement so that each directional gesture or movement detected by the optical joystick cause a corresponding navigation movement of the onscreen position indicator 516 in the command list 512.

The active command line driven user interface includes a parser (not shown) and a command interpreter (not shown). The parser parses the input string in the input field into command information including commands, commands parameters and/or connectors. The parser may use a form of natural language parsing when parsing the input string in the input field. The command interpreter interprets the command information and optionally context information in response to activation input received by input device of the portable electronic device 100, and instructs the operating system 146 and/or applications 148 to perform specific functions, actions, operations or tasks (collectively referred to as actions) in accordance with the command information in response to the activation input.

The active command line driven user interface supports a number of commands. The commands may be application-specific or may apply across applications 148. The commands share a common syntax, one embodiment of which will now be described. Every command starts with a command name followed by one or more command parameters. At least some of the command parameters are command-specific and at least some of the command parameters are context-sensitive.

Context sensitivity may be based on a highlighted/selected item (e.g., text, icon, image or other data object). For example, if text is highlighted in an application 148 or a cursor is placed on or over a word when the active command line user interface is invoked, the selected text may be used as a command parameter value. For example, highlighting the text "bonjour mes amis" and inputting the command "Translate" in the command line 504 in combination with activation input may cause the "Translate" command to be executed or invoked in respect of the text "bonjour mes amis", causing the text to be translated from French to English (or other specified language). Connectors may be required in some examples, for some commands, or both. For example, the connector "this" or "it" may be supported by the "Translate" command, or possibly required to fully define the "Translate" command. Highlighting the text "bonjour mes amis" and inputting "Translate this" or "Translate from French", etc. in the command line 504 in combination with activation input may cause the "Translate" command to be executed or invoked in respect of the text "bonjour mes amis", causing the text to be translated from French to English.

Context sensitivity may be based on temporal information, such as the date and/or time, spatial information such as the current location of the portable electronic device 100 determined via GPS (Global Positioning System), triangulation via base stations in the wireless network 150, or other location services, designed local data on the portable electronic device 100, among other possibilities. Context sensitivity may be based on preferences stored on the portable electronic device 100.

Context sensitivity may be based on an environment in some embodiments, such as the device state, from which the active command line UI is invoked. Examples of device state include, but are not limited to, whether the radio is on or off, battery level, whether the portable electronic device 100 is open or closed when the portable electronic device 100 is a slider-type or flip-type device, whether Wi-Fi^{™} is on or off, whether Bluetooth^{™} is on or off, a current language of the portable electronic device 100, the wireless carrier, or device capabilities (such as whether it has Wi-Fi^{™} or GPS, etc.).

Context sensitivity may be based on the active application 148 (sometimes called the foreground application), for example, the active application 148 when the active command line UI is invoked. For instance, the active command line user interface may automatically display the supported commands associated with the active application 148 in the command list 512. For example, the Browser application may cause the "Browse" command and "Go to" command to be displayed in the command list 512, possibly before any input is received in the command line 504. The Map application may cause the "Directions" command, "Map" command, and "Whereis" command to be displayed in the command list 512.

Additionally, a particular command may operate differently when invoked from within a particular application. Thus, the active application 148 may itself operate as command parameter for a particular command or may operate as an alias for another command. In the Map application, for example, the "Whereis" command may operate the same as a "Local Search" command in the Map application, causing local points of interest (POIs) to be displayed in the command list 512 in the same manner that matching commands are shown, or matching contacts as shown when contact objects are searched. If invoked via a menu, the active application 148 may be immediately known because the active application 148 creates the menu for invoking the particular command and can pass its information to command. If invoked via a convenience key, an API may be used to determine the active application 148 currently in the foreground.

The active application 148 is determined from information stored in RAM 108 and/or memory 110, such as an application log which logs or tracks application usage. Similarly, previously used applications 148 are logged or tracked using the application log.

Context sensitivity may be based on any one or more of the factors described above, depending on the embodiment.

The command results presented in the command list 512 may also be affected based on a predicted likelihood of use based on usage statistics. The usage statistics may include any one or more of, a frequency with which each command is used, the values of parameters which are usually provided by a user when a particular command is used, temporal information, such as the date and/or time, when a particular command is used, or spatial information such as the location of the portable electronic device 100 when a particular command is used.

The frequency with which each command is used may be used to sort matching commands in order of most-frequency used rather than alphabetically. The parameters which are usually provided by a user when a particular command is used may be used to predict values for command parameters. For example, "Call V" results in more calls to contact "Vesper" than contact "Victoria", predicting the Vesper as the value of the command parameter, and displaying and selecting this prediction allows a call to Vesper to be initiated just by causing the activation input (such as depression of a "Call" or "ENTER" key). If the prediction is incorrect, further input in the command line, such as "Call Vi", will further disambiguate the matching commands. The telephone number of the contact, as a further command parameter, may also be predicted. For example, the work, home or mobile telephone number may be predicted depending on the usage statistics. The predicted telephone number may be highlighted by default in the command list 512.

If the time or location of the portable electronic device 100 is used, this may increase the accuracy of a prediction. For example, if Vesper is usually called in the morning and Victoria is usually called at night, using temporal information about when a particular command is used may increase the accuracy of the prediction. Spatial information such as location information may similarly increase the accuracy of the prediction

The portable electronic device 100 may maintain usage statistics for each application 148 supported by the active command line drive user interface so that commands and command parameter values used by users are stored. The usage statistics may include the application history (or log) of each supported application 148 including, but not limited to, email logs, SMS logs, call logs, Internet browsing history, search history and/or application-specific access lists which identify the documents/data objects accessed by the respective application 148.

The usage statistics are jointly maintained based on direct interaction with a supported application 148 and indirectly interact with a supported application 148 by using application commands in the command line 504. The usage statistics are tracked to monitor the choices made in different contexts to predict the command(s) and/or command parameter(s) a particular user is more likely to make based on the input in the command line 504 and context information, in view of the usage statistics. The matching results may be filtered to remove less likely results so that only the most likely results, e.g., results having a predicted likelihood which exceeds a threshold likelihood, are displayed in the command list 512. The matching results may be sorted based on probability to display the results in the command list 512 in decreasing order of probability. Sorting may occur instead of, or in combination with, filtering the results depending on the embodiment. The command list 512 is dynamic so the filtered or sorted results will change in accordance with changes in the input string in the command line 504 and/or context information.

Filtering and sorting the matching results may present the results in the command list 512 in a manner which makes the desired action easier to execute or invoke in different situations, either by sorting the results based on probability so the most probable result is displayed first in the command line 504 and highlighted, or by maintaining the default the order of results and highlighting the most probable result in the command list 512. For example, if a user usually calls the mobile phone number of a particular contact, the mobile phone number is the most probable phone number and would be highlighted/selected for faster calling.

Command parameters may require connectors between command parameters. Each connector is one or more words which link a command parameter to other command parameters. A connector usually indicates the temporal, spatial or logical relationship between the preceding command parameter and the subsequent command parameter. Common connectors are "to", "from", "of", "with", "using", "for", "in" and "in category". Any combination of these connectors may be supported.

The first command parameter typically does not require any connectors preceding the first command parameter; however, the first command parameter may use preceding connectors if desired. Subsequent command parameters require preceding connectors. For example, in the command "Directions to {end address} from {start address}", the command name is "Directions", with "to" and "from" being connectors between the first command parameter {end address} and the second command parameter {start address}. The connectors assist the parser in determining the values of the first command parameter {end address} and second command parameter {start address}. This approach to handling command parameters is more compatible with speech recognition as it allows users to speak more naturally. The use of connectors is also more intuitive than using dashes, slashes or other connectors because it results in syntaxes that are likely to be grammatically correct sentences, requiring less learning for users and being more likely to result in the command which the user intends on his or her first attempt.

The commands supported by the command line 504, in one example embodiment, include the following commands having the shown syntax:
- Appointment {date} from {start_time} to {end_time} title {title} of the calendar or PIM application - aliases: create appointment, make appointment, meeting
- Bing {query} of the Bing application or plug-in
- Browse {url} of the browser application - aliases: show, display, go to, goto
- Calculate {expression} of the calculator application - aliases: what is
- Call {contact | phone #} of the phone or PIM application - aliases: Dial, Phone
- Dictionary {word} of the dictionary application
- Directions to {end address | here} from {start address | here} of the mapping application - aliases: get directions
- Email {contact | email address} of the messaging or PIM application - aliases: send email to, send e-mail to
- Find {name | title} of the messaging or PIM application - aliases: search for
- Find messages from {sender default=me} to {recipient default=me} containing {text default=anything} of the messaging or PIM application - aliases: search for
- Find anything containing {text} of the local search application - aliases: search for
- Google {query} of the Google application or plug-in
- HowTo {question} of the operating system or search application
- Imdb {query} in category {category} of the IMDB application
- Launch {application} of the operating system - aliases: run, start
- Lookup {contact} of the address book or PIM application
- Map {address | contact} of the mapping application - aliases: map of, display a map of, display map of, display map, display, show a map of, show map of, show
- Memo {title} of the memo or PIM application
- MMS {contact | phone #} of the messaging or PIM application
- PIN {contact | phone #} of the messaging or PIM application
- Play {song | album | artist | genre | ringtone | voicenote} of media player application - aliases: listen
- Play {video} of media player application - aliases: watch
- SMS {contact | phone #} of the messaging or PIM application
- Task {title} of the task or PIM application - aliases: remember to, remember
- Thesaurus {word} of the thesaurus application
- Translate {text} from {source_language} to {target_language} of the translate application
- View {picture} of media player application
- Wikipedia {query} of the Wikipedia application or plug-in
- Whereis {query} near {address default=here} of the mapping application - aliases: where is, where are, where
- Yahoo {query} of the Yahoo application or plug-in

### Forgiveness

The active command line driven user interface provides forgiveness in that each command name has a number of aliases which may be alternate names or phrases. A command alias may be shared between two or more command names. If multiple commands share the same alias, the multiple commands will all appear in the command list 512. This obviates the need for users to know the command name for a desired action, or to navigate through a list of available commands in a user interface menu. The user need only type what they want naturally. If the input provided by the user matches any one of the command aliases, that command is displayed in the command list 512. For example, as shown in Figure 5, if the user types the command alias "Dial" in the command line 504 the proper command name "Call" is displayed in the list in the command list 512. As shown in Figure 6, if the user types the command alias "Show", the proper command name "Browse" and "Map" commands are displayed in the list in the command list 512. Displaying the proper command name in response to entry of a command alias may help users learn the proper command names overtime as a result of being repeatedly presented with the proper command names in response to entry of a command alias. This may reduce the amount of alias handling over time, thereby reducing processing demands on the portable electronic device.

### Ambiguity resolution

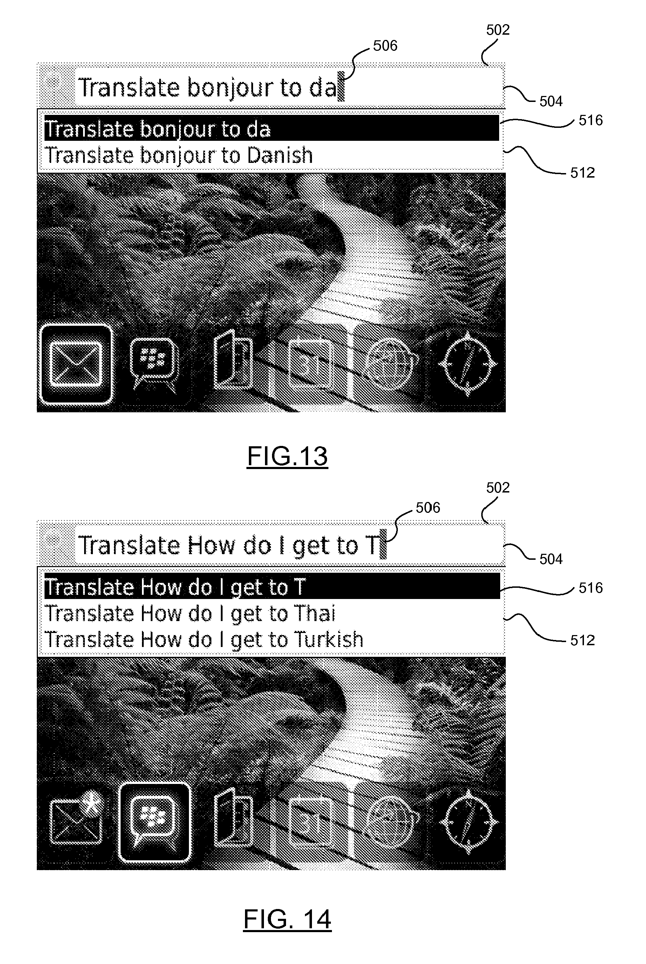

The active command line driven user interface provides ambiguity resolution between connectors and command parameters. Command parameters may sometimes have values which may include text that is also a connector or a part of a connector. Ambiguity is resolved by processing and displaying all command possibilities and matching the input string in the command line 504 in the command list 512. As shown in Figure 14, the command "Translate" supports a connector "to" after the {text} command parameter, e.g. "Translate {text} to {target_language}". Ambiguity exists when a user is trying to translate the phrase (e.g., a text value) "How do I get to Toronto?" since the connector "to" is included in the {text} command parameter. Other matching command possibilities are that the user is trying to translate the phrase "How do I get to" to Thai, or that the user is trying to translate the phrase "How do I get to" to Turkish.

### Discoverable command syntax

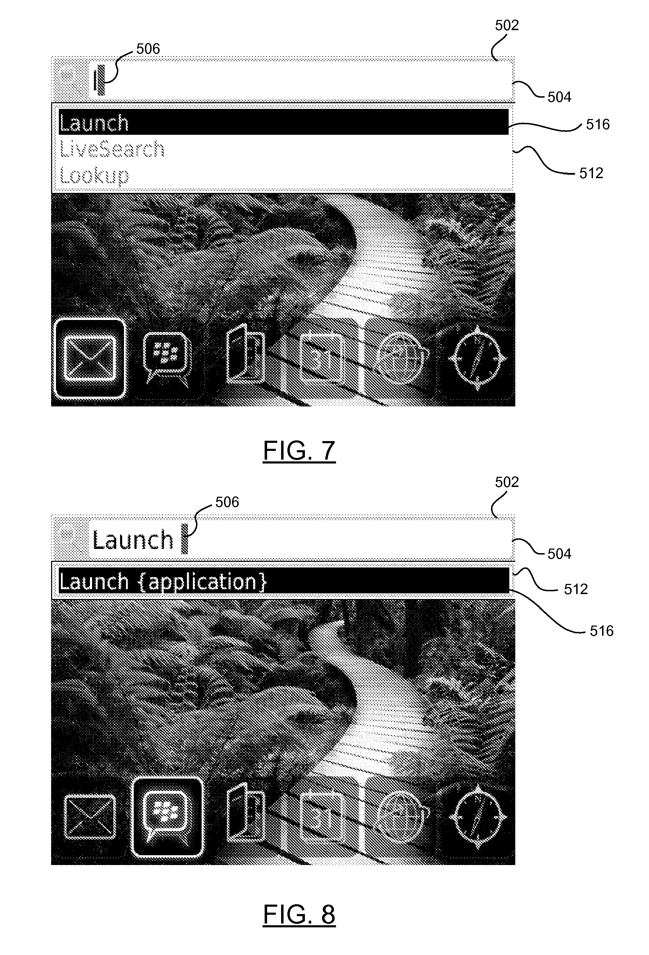

The active command line driven user interface provides discoverable command syntax. When a proper command name is presented in the command line 504 (possibly when the command name is typed followed by a space character), the command syntax associated with that command are displayed in the command list 512 as shown in Figure 8. This may occur regardless of whether the proper command name was input directly in the input field of the command line 504, selected from a list of matching commands in the command list 512, or autocompleted in response to input in the input field and the designated selection input.

Displaying the command syntax associated with a command informs users about the command syntax, including the relevant command parameters. This provides users with information regarding how to input the required command parameters. Each required command parameter and its connectors (if any) are displayed in the command list 512. Each subsequent command parameter and its preceding (or leading) connector are displayed in a list in the command list 512 in sequence. In some examples, each subsequent command parameter is displayed in the list in the command list 512 only when a value is input for the preceding command parameter and its connectors (if any). This approach leads users through the input process, thereby facilitating the use of the active command line driven user interface.

Some command parameters may specify allowed values whereas other parameters may not specify allowed values. When a command parameter specifies allowed values, the command parameter may only have a value from a set of predetermined allowed values. If a command parameter does not specify allowed values, any value may be input for the command parameter. In some embodiments, when a command parameter specifies allowed values and a value which is not in the set of predetermined allowed values is input, subsequent command parameters are only displayed when the erroneous input is corrected to be one of the predetermined allowed values. An error notification, such as flag or dialog box may be displayed to notify the user of the error and input of further command parameters is prevented. The error notification may include a message explaining the error. The error notification may prompt the user for a valid input, possibly specifying the set of predetermined allowed values.

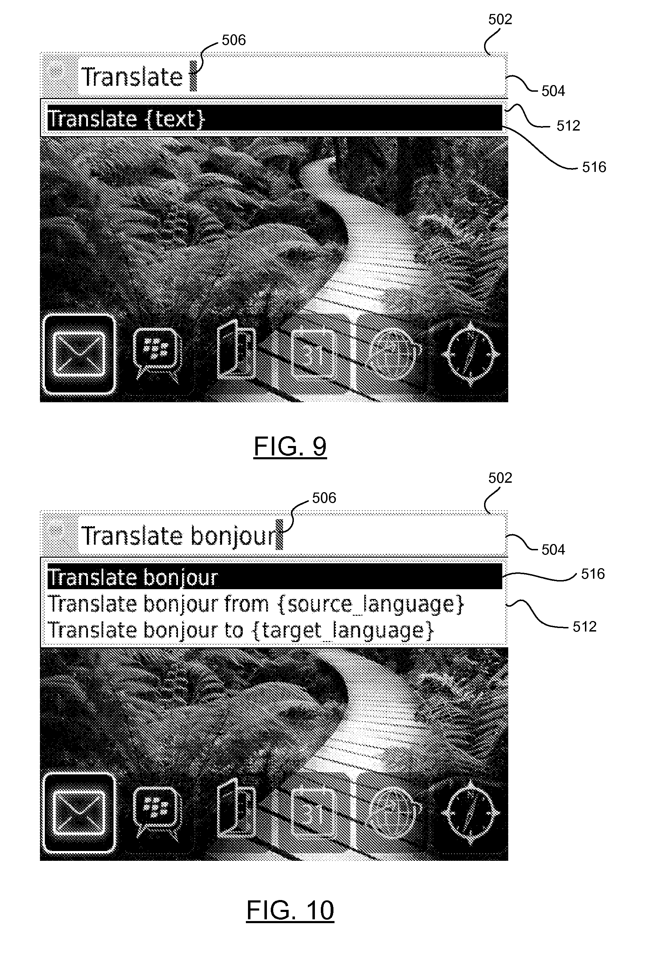

Reference will now be made to Figures 9 and 10 to illustrate the operation of discoverable command syntax. Figures 9 and 10 illustrate the operation of a Translate command in accordance with one embodiment of the present disclosure. When the "Translate" command is input in the command line 504, the first command parameter {text} is displayed in the command list (Figure 9). When the text "bonjour" is input for the command parameter {text}, the available secondary command parameters associated with the command and the leading connectors are displayed in the command list 512. In the shown example, the secondary command parameter {source_language} and its leading connector "from" and the secondary command parameter {target_language} and its leading connector "to" are displayed in the command list 512 (Figure 10).

For a particular command, some command parameters may be mandatory (or required) command parameters which require a value to be set in the command line 504 based on received input, for example from the user, for the input string in the command line 504 to be properly defined. Other command parameters may be optional command parameters which do not require a value to be set in the command line 504 based on received input for the input string in the command line 504 to be properly defined. Optional command parameters have a default value which may be used instead of received input, for example from the user; however, mandatory command parameters do not have a default value. The command may be displayed in the command list 512 so as to show all of the command parameters so that users know which command parameters exist. The command may be displayed in the command list 512 so as to show all "available" values for those command parameters. "Available" values are command parameter values which can be selected for a particular command parameter even though other values for the particular command parameter may be input. "Available" values are different from "allowed" values described above from which a value must be selected.

The command parameters may be displayed all at once, on different lines in the command list 512. A command entry in the command list 512 with the next command parameter to be defined set to the default values may be displayed in the command list 512 and highlighted/selected by default to facilitate activation of the respective command in response to activation input.

Each command may support multiple syntaxes. For example, the "Set" command parameter may support multiple syntaxes: Set language {language}, Set password {old password} {new password}, Set font {name}, Set alarm off and Set alarm on {time}. The user is informed of the syntaxes of a particular command by the autocomplete function by a corresponding entry in the command list 512. When a command supports multiple syntaxes, each possible syntax is displayed in the command list 512 and is filtered in accordance with the input string in the input field of the command line 504 as the input string changes. In some circumstances, multiple syntaxes may be similar to having different commands each with its one command parameter. If the different syntax is indicative of completely different functionality, then separate commands may be appropriate. If the different syntax results in actions with overlapping functionality and shared code, one command with multiple syntaxes may be appropriate.

### Discoverable command parameter syntax

The active command line driven user interface provides discoverable command parameter syntax. In some examples, the default values of optional command parameters are displayed in the command list 512. The default values may be dynamically determined, for example, based on context information. This approach informs users of the default values and infers the purpose of the command parameter and its syntax should a user choose to override the default value. For example, for the "Translate" command, the command parameter {source_language} may be automatically detected in accordance with the value of the {text} command parameter. Using the example of Figures 9 and 10 described above, the "Translate" command may be dynamically determined to be "Translate bonjour from {French}" where "French" was dynamically determined to be the source language in accordance with the value of the command parameter {text}. The value of the command parameter {target_language} may be dynamically determined in addition to, or instead of, the command parameter {source_language}. For example, the "Translate" command may be dynamically determined to be "Translate bonjour to {English}" where "English" was dynamically determined to be the target language in accordance with a language setting of the portable electronic device 100 which, for example, may be stored in memory 110.

Alternatively, in other embodiments the names of the optional command parameters may be displayed in the command list 512 rather than showing default values as described above.

Each command parameter may also support multiple syntaxes. The user is informed of the syntaxes of a particular command parameter by the autocomplete function by a corresponding entry in the command list 512 as the input string in the input field of the command line 504 grows. For example, the syntax for the command parameter {date} may support day of the week (e.g., Friday) or date of month (e.g. May 1^{st}). Similarly, the format of a {time} command parameter may be hours:minutes am/pm (with or without punctuation and/or spaces), e.g. 11:30 am or 1130am, or may support a 24-hour clock.

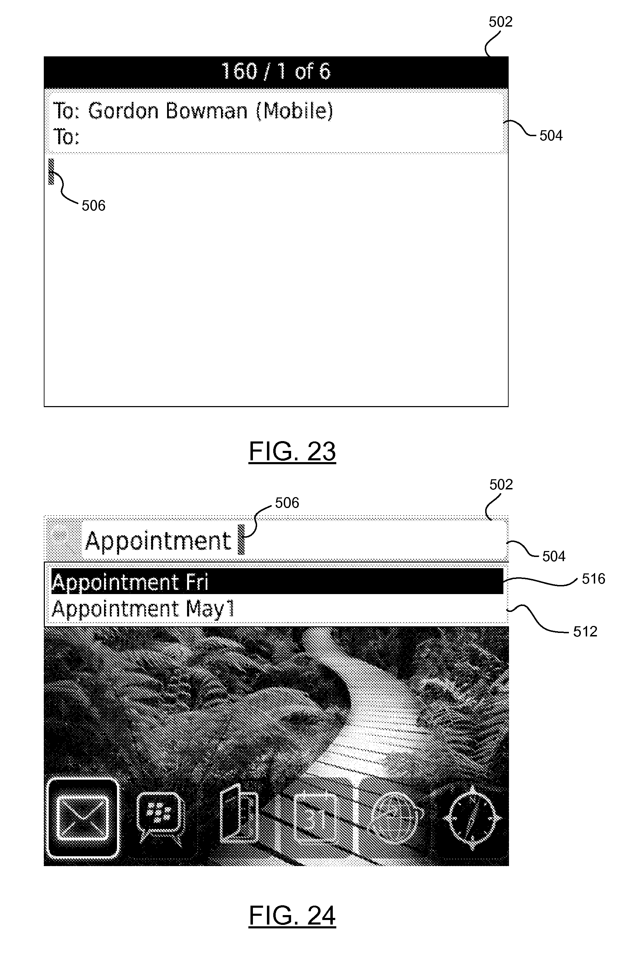

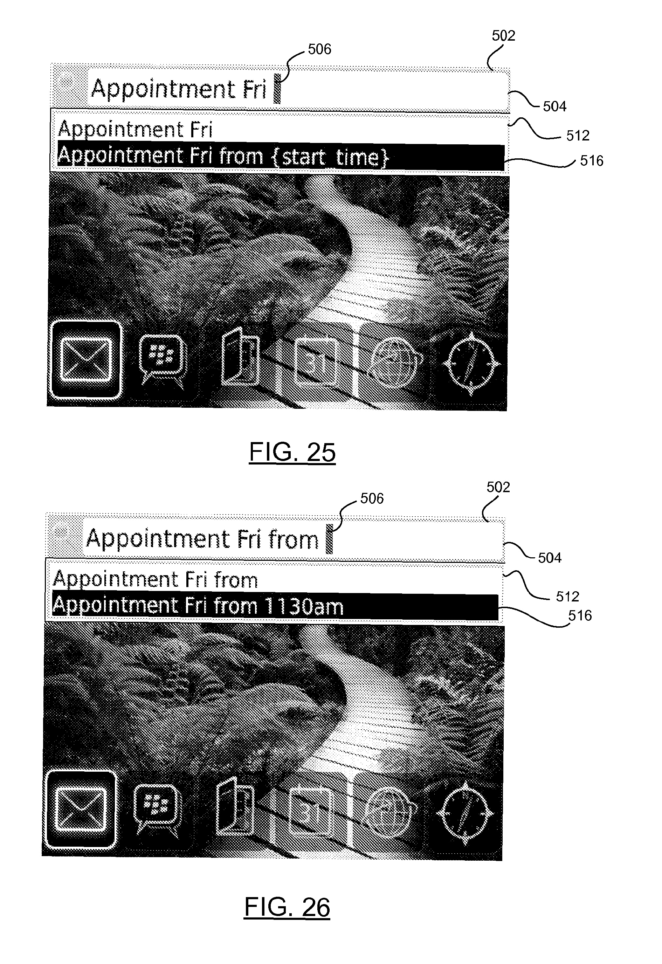

Figures 24 to 31 illustrate the operation of an "Appointment" command in accordance with one embodiment of the present disclosure. The "Appointment" command is used by a calendar application or other application 148 on the portable electronic device 100 and has the syntax "Appointment {date} from {start__time} to {end_time}". The command line 504 dynamically determines default values for the optional command parameters {date}, {start_time} and {end_time}. As shown in Figure 24, entry of the Appointment command in the command line 504 causes the current date to be added as the value of the {date} command parameter. Two alternate command parameter syntaxes are supported in the shown example, day of week (e.g. "Fri" for Friday) and day of month (e.g., "May1" for May 1^{st}), each of which is displayed in the command list 512. When the command entry in the command list 512 with the day of week syntax is highlighted/selected with the onscreen position indicator 516 and selected via selection input, this causes the input in command line 504 to be updated to "Appointment Fri" and causes the next part of the command syntax, the {start_time} command parameter, to be displayed in the command list 512 with its preceding connector "from" as shown in Figure 25.

When the command entry in the command list 512 with the generic {start_time} command parameter syntax is highlighted/selected with the onscreen position indicator 516 and selected via selection input, this causes the input in command line 504 to be updated with the connector of the {start_time} command parameter to "Appointment Fri from" as shown in Figure 26. This also causes the default value for the {start_time} command parameter to be dynamically determined and displayed in the command list 512. In the shown example, 11:30 am is the next available timeslot of the current day and becomes the dynamically determined default value for the {start_time} command parameter.

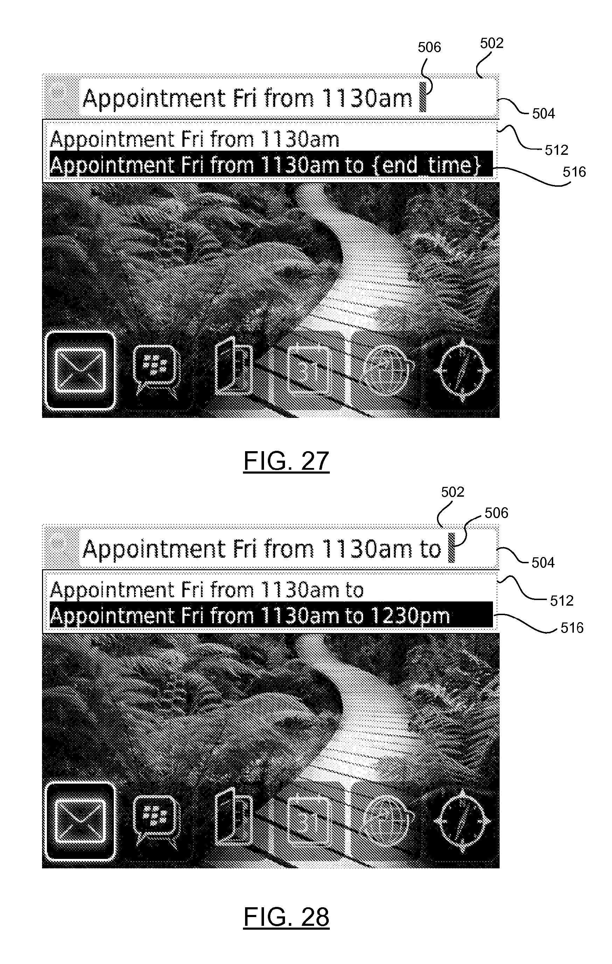

When the command entry in the command list 512 with the dynamically determined 11:30 am {start_time} command is highlighted/selected with the onscreen position indicator 516 and selected via selection input, this causes the input in command line 504 to be updated with the dynamically determined value of the {start_time} command parameter to "Appointment Fri from 1130am" as shown in Figure 27. This also causes the next part of the command syntax, the {end_time} command parameter and its preceding connector "to" be displayed in the command list 512.

When the command entry in the command list 512 with the generic {end_time} command parameter syntax is highlighted/selected with the onscreen position indicator 516 and selected via selection input, this causes the input in command line 504 to be updated with the connector of the {end_time} command parameter to "Appointment Fri from 1130am to" as shown in Figure 28. This also causes the default value for the {end_time} command parameter to be dynamically determined and displayed in the command list 512. In the shown example, appointments have a default duration of 1 hour and 12:30 pm is 1 hour after the dynamically determined start time. Thus, 12:30 pm becomes the dynamically determined default value for the {end_time} command parameter.

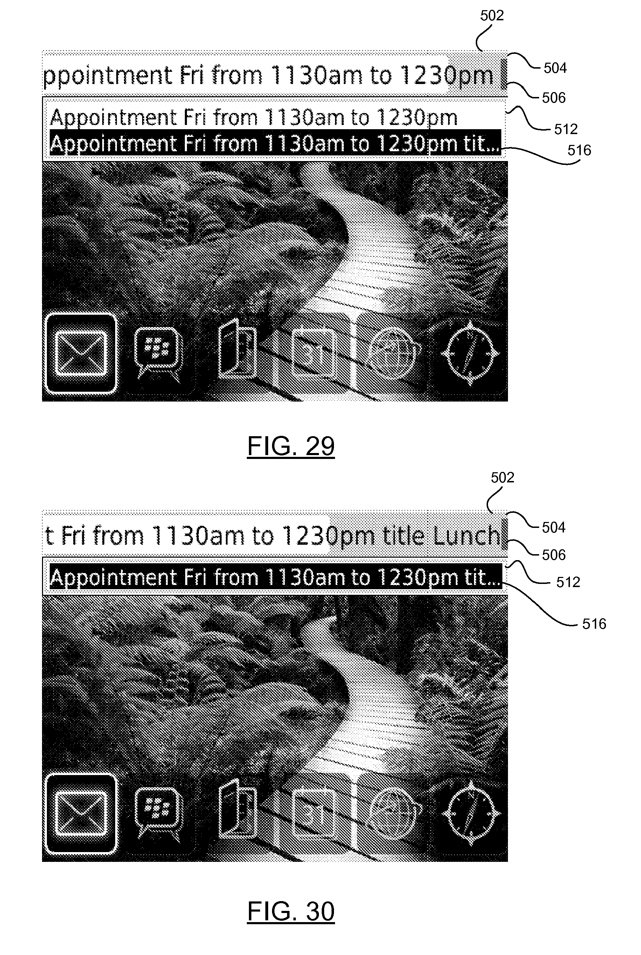

When the command entry in the command list 512 with the dynamically determined 12:30 pm {end_time} command is highlighted/selected with the onscreen position indicator 516 and selected via selection input, this causes the input in command line 504 to be updated with the dynamically determined value of the {end_time} command parameter to "Appointment Fri from 1130am to 1230pm" as shown in Figure 29. This also causes the next part of the command syntax, the {text} command parameter and its preceding connector "title" be displayed in the command list 512. Any text may then be input by the user such as, for example, the title "Lunch" as shown in Figure 30. Alternatively, the text may be dynamically determined from context information. For example, because the appointment is scheduled to occur over the noon hour, the title "Lunch" may be dynamically determined and displayed in the command list 512.

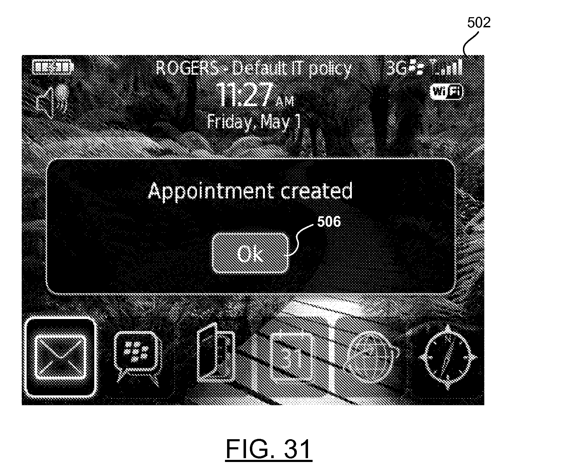

When the mandatory command parameters have been defined, activation input causes an Appointment object including the appointment information in the input field of the command line 504 to be created and stored, for example, in the memory 110 of the portable electronic device 100 as shown in Figure 31

The determined default values for the command parameters may be overridden with a different input, for example in response to corresponding input of a user. For example, in connection with the "Appointment" command, the determined default values for the command parameters {date}, {start_time} and {end_time} may be overridden with a different input during creation of the appointment at any time, for example in response to corresponding input of a user.

### Autocompletion

### Autocompletion of commands

The active command line driven user interface provides for the autocompletion of commands. The list of commands in the command list 512 includes all commands that start with the characters in the input field of the command line 504 or others matching the input string in the input field of the command line 504. Designated selection input may be used to autocomplete a particular command or command parameter being entered in the command line 504. The designated selection input is the actuation of a <SPACE> key of a keyboard of the portable electronic device 100 in at least some embodiments, however, other suitable input may be used as the designated selection input in other embodiments. The selection input typically also causes a space character to be added to the input field in the command line 504 following the autocompleted the command or command parameter. After a command or command parameter has been entered in the command line 504, a command parameter, or further command parameter(s) may be input into the command line 504.

For example, referring to Figures 7 and 8, inputting the letter "I" at the start of the input field in the command line 504 causes a list of commands starting with the letter "I" to be displayed in the command list 512 (Figure 7). The list of commands may be limited using context information in some embodiments, as described below. A default command in the command list 512 is highlighted/selected with the onscreen position indicator 516 in the command list 512. The default command is typically the first command in the list of commands in the command list 512, i.e., the command appearing at the top of the list in the command list 512. Actuation of the <SPACE> key of the keyboard autocompletes the command with the highlighted/selected command, in shown example of Figure 8 this is the "Launch" command. This "Launch" command name is then displayed in the command line 504 followed by a space character and the cursor 506.

Typically autocompletion does not complete aliases to avoid confusion because the purpose of aliases is to show the proper command names in the command list 512. As a result, if both aliases and commands were included in the command list 512 the proper command name would not be clearly indicated to users. However, in some embodiments autocompletion could complete aliases as well as proper command names.

### Autocompletion of command parameter values

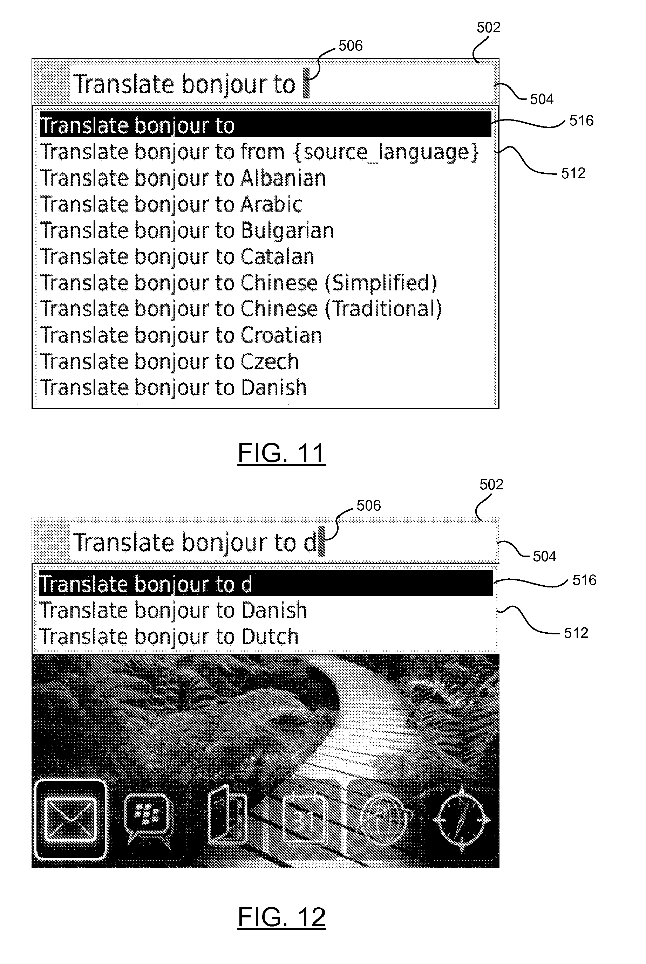

The active command line driven user interface also provides autocompletion of command parameter values based on available values or allowed values. If a command parameter has available values or allowed values, each of the available values or allowed values matching the input string in the input field will be displayed in the command list 512 as the input string in the input field of the command line 504 grows and changes as the user types. The allowed values displayed in the command list 512 are dynamically filtered from the set of available values or allowed values in accordance with the input string in the input field of the command line 504 as the input string changes. Figures 11 to 13 illustrate the autocompletion of command parameter values based on available values. As the input string "Translate bonjour to" in Figure 11 grows with the addition of "d" in the input string (Figure 12) and then the addition of "da" in the input string (Figure 13), the available values displayed in the 512 are dynamically filtered from a larger list to a progressively smaller list. The parameter {target_language} in Figures 11 to 13 has available values rather than allowed values. In Figure 13, the input string "Translate bonjour to day" is included in the command list 512 along with the matching command "Translate bonjour to Danish" since another target language that starts with "da" may be input. If the parameter {target_language} in Figures 11 to 13 supported allowed values rather than available values, the input string "Translate bonjour to da" need not be included in the command list 512 if the command was completed defined, i.e. if "Translate bonjour to Danish" was the only matching command based on the input string in the command line 504 and the allowed values for the parameter {target_language}.

### Autocompletion of command parameters values using local data

The active command line driven user interface also provides autocompletion of command parameter values using local data stored on the portable electronic device 100. Some command parameters may refer to the names of data objects stored on the portable electronic device 100. Examples of data object stored on the portable electronic device 100 include, but are not limited to, appointments, contacts, pictures, videos, songs, voice notes, ring tones, memos, tasks, and emails. Other data object names supported by command parameters and corresponding to data objects stored on the portable electronic device 100 are possible. When one or more characters of a command parameter matching the name of a data object or data objects stored on the portable electronic device 100 is input in the input field, the data source(s) associated with the matching data objects are searched and the matches are displayed in the command list 512.

The command line application 164 has access to one or more lists (or indexes) of the local data objects stored in the databases 166. The portable electronic device 100 may maintain a master list of all data objects stored in all of the databases 166, individual lists of the data objects stored in individual databases 166, or both. The lists are typically maintained by the respective applications 148, being modified as the data objects associated with each application 148 changes (e.g., as data objects are added or deleted) so accessing the lists does not create significant processing overhead as the lists already exist. Searching local data objects, such as emails, may utilize specific search application based on the data type using a specific API, or a universal search application which may have a number of supporting APIs based on the based on the data type.

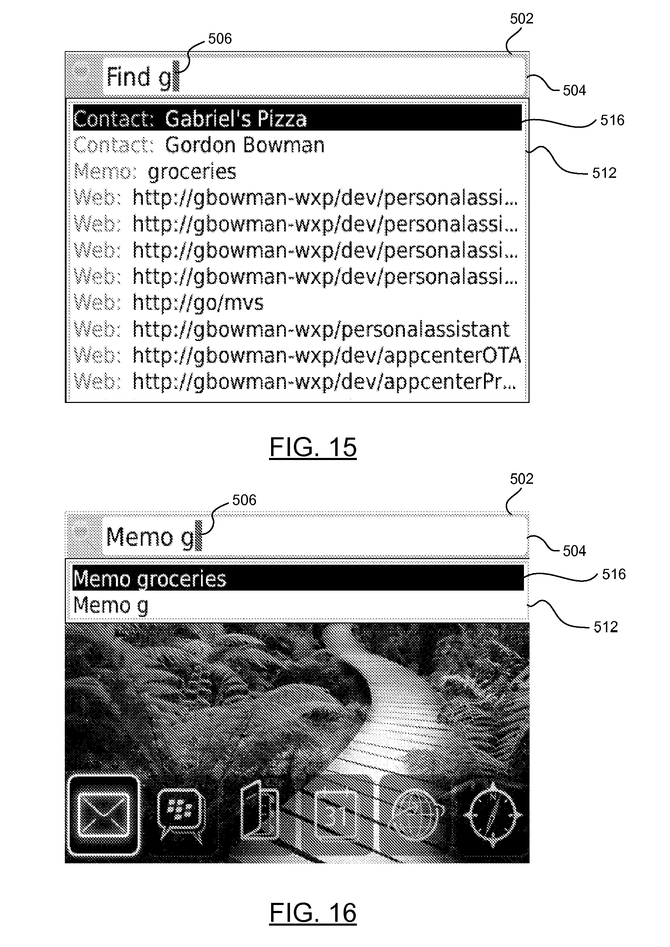

Some commands, such as the "Find" command, have a generic command parameter for which all data sources will be searched for results matching the input in the input field of the command line 504. The data source may be a local data source on the portable electronic device 100, or a remote data source such as the World Wide Web ("Web"). This type of command will return many results. Users may have to scroll through the results to locate the command of interest or input more characters in the input field to further filter the results and reduce the size of the list. Figure 15 illustrates the result of the "Find" command performed on the generic command parameter with a value of "g" which searches every data source available to the portable electronic device 100, whether local or remote.

Some command parameters may refer to the names of data objects stored remotely, allowing remote searching. In some embodiments, the portable electronic device 100 has information concerning the data which exists remotely (e.g. the names of the songs in your remote music collection) to allow searching on remote data objects. Alternatively, fast queries may be sent to the remote source to and fast query responses containing the matches are sent back to the portable electronic device 100. This alternative solution should send queries and receive query responses at a sufficient speed such that it is usable in the same way as autocompleting local content.

### Autocompletion of parameter values based on command parameter type

The active command line driven user interface also provides autocompletion of parameter values based on command parameter type. If a command has a command parameter of a particular type, the data searched by the command is limited to that particular type. For example, as shown in Figure 16, the Memo command has the name of a memo as its command parameter so that only matching data objects are returned and displayed in the command list 512. For example, if the parameter is looking for memo, it will only match on memos, not songs. The data searched by the command is limited to memos such that only matching memos are returned and displayed in the command list 512. This makes it easier and faster to search for items both in terms of processing efficiency of the portable electronic device 100 and user experience.

### Autocompletion of parameter values based on the command

The active command line driven user interface also provides autocompletion of parameter values based on the command. The command itself may provide a hint to further reduce the matching results. This may be advantageous when a different command uses different data records within a data object. For example, when using the Email command, any contacts which do not include an email address are filtered out and not displayed in the command list 512. For the Call command, contacts which do not contain at least one phone number are filtered out and not displayed in the command list 512. For the SMS command, contacts which do not contain a mobile phone number are filtered out and not displayed in the command list 512. The more the list of matching results is reduced, the easier and faster subsequent matching becomes both in terms of processing efficiency of the portable electronic device 100 and user experience.

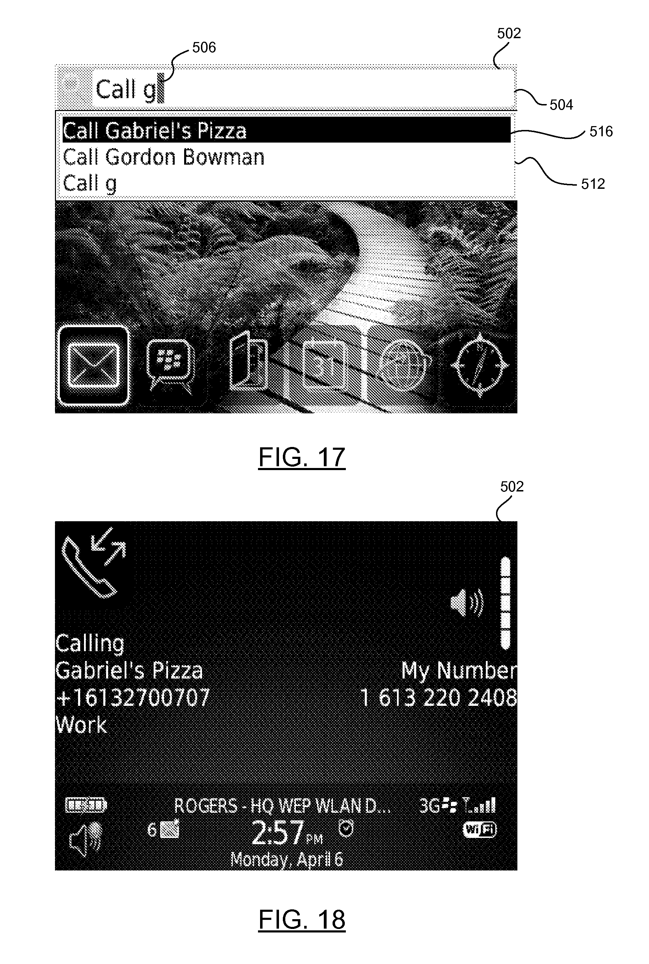

Figures 17 to 21 illustrate the operation of a Call command in accordance with one embodiment of the present disclosure. The Call command only searches contacts containing at least one phone number. In Figure 17, the Call command and a command parameter having a value of "g" has been input in the command line 504. Two contacts match the command parameter "g" and have at least one phone number, "Gabriel's Pizza" and "Gordon Bowman". Each of these results is displayed in the command list 512. In Figure 18 the highlighted/selected contact, "Gabriel's Pizza", is executed or invoked in response to activation input received when the respective command in the command list 512 is highlighted/selected. The contact "Gabriel's Pizza" has only one phone number so the activation input causes the portable electronic device 100 to call the phone number associated with the contact "Gabriel's Pizza".

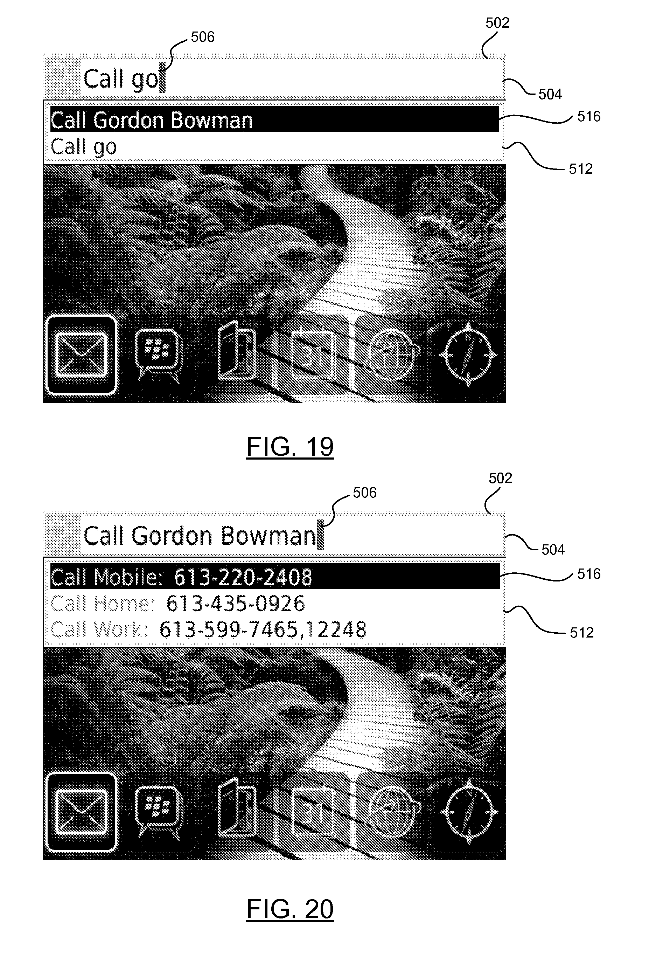

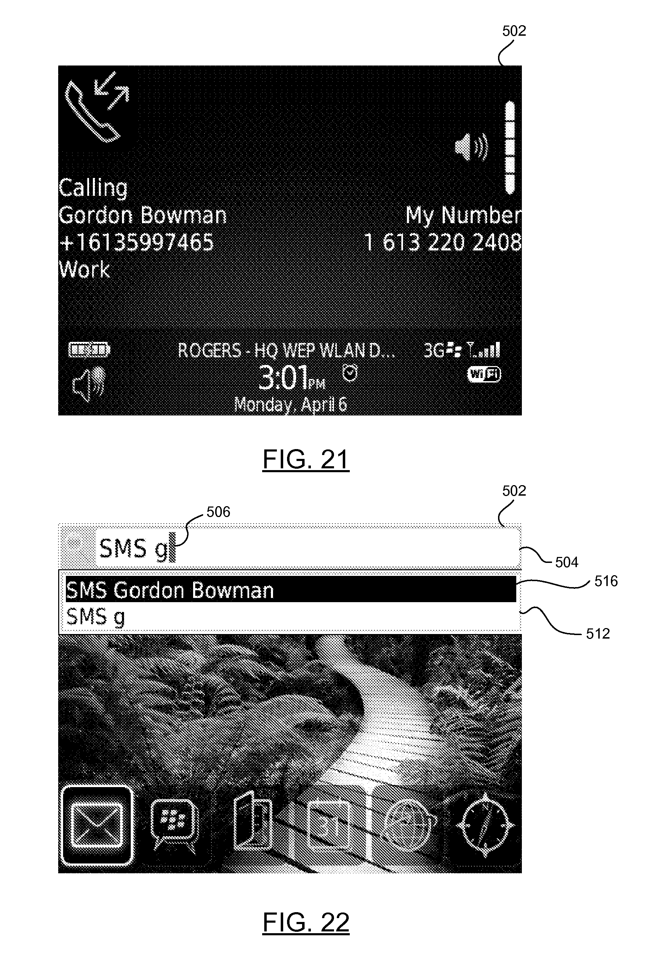

In Figure 19, the Call command and a command parameter having a value of "go" has been input in the command line 504. Only one contact matches the command parameter "go" and has at least one phone number, "Gordon Bowman". This result is displayed in the command list 512. In Figure 20, the highlighted/selected contact, "Gordon Bowman", is executed or invoked in response to activation input received when the respective command in the command list 512 is highlighted/selected. The contact "Gordon Bowman" has multiple phone numbers so the activation input causes the multiple phone numbers to be displayed on the display 112. In the shown example, a descriptor of each phone number is displayed in association with the respective phone number. In Figure 21, the "Call Work" command has been highlighted/selected and then executed or invoked in response to activation input received when the "Call Work" command was highlighted/selected in the in the command list 512. The activation input causes the portable electronic device 100 to call the "Work" phone number associated with the contact "Gordon Bowman".

Figures 22 and 23 illustrate the operation of the SMS (Short Message Service) command in accordance with one embodiment of the present disclosure. In Figure 22, the SMS command and a command parameter having a value of "g" has been input in the command line 504. Only one contact matches the command parameter "g" and has a mobile phone number, "Gordon Bowman". This result is displayed in the command list 512. In Figure 23, the highlighted/selected contact, "Gordon Bowman", is executed or invoked in response to activation input received when the respective command in the command list 512 is highlighted/selected. The contact, "Gordon Bowman" has only one mobile phone number so the activation input causes the portable electronic device 100 to initiate a new SMS text message to that mobile phone number. Initiating a new SMS text message includes generating an SMS message composition window with the "To:" address field autopopulated with the address information for the contact "Gordon Bowman", and displays the SMS message composition window on the display 112.

### Autocompletion of parameters based on time and/or date

The active command line driven user interface also provides autocompletion of parameters based on time and/or date. For example, the "Appointment" command provides suggested values for the {date} and {start_time} command parameters based on the current date and time. As shown in Figure 24 described above, entry of the Appointment command in the command line 504 causes the current date to be added as the value of the {date} command parameter.

### Autocompletion of parameters based on previous parameters

The active command line driven user interface also provides autocompletion of parameter values based on the values of previous parameters. For example, the "Appointment" command provides suggested values for the {end_time} parameter based on the value of the {start_time} parameter based on a default duration, as described above. The default duration for an appointment object is 1 hour in some embodiments, but may vary.

### Example Operations

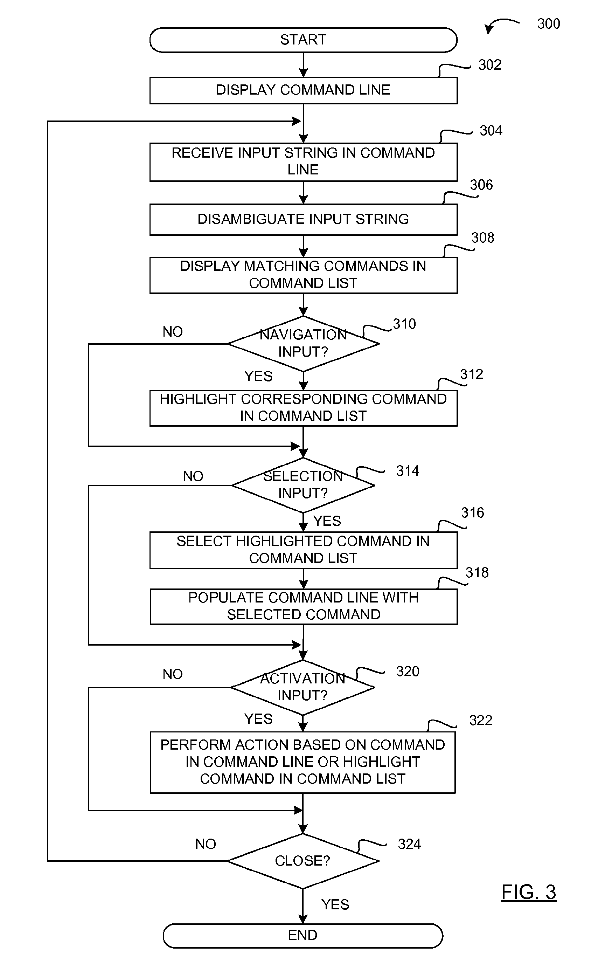

A flowchart illustrating one example embodiment of a method 300 of interacting with a portable electronic device is shown in Figure 3. The method 300 may be carried out by software executed, for example, by the processor 102. Coding of software for carrying out such a method 300 is within the scope of a person of ordinary skill in the art provided the present disclosure. The method 300 may contain additional or fewer processes than shown and/or described, and may be performed in a different order. Computer-readable code executable by at least one processor 102 of the portable electronic device 100 to perform the method 300 may be stored in a computer-readable medium such as the memory 110.

The portable electronic device 100 displays the command line 504 of the active command line drive user interface on the display 112 (302). As described in detail above, the command line 504 has an input field for receiving an input string. The command line 504 may be part of the home screen 502 of the portable electronic device 100, or may be called or invoked from any application 148 or user interface screen in response to corresponding input such as, a designated button or designated key in the keyboard, a designated onscreen item selected via touching the touch-sensitive display 118, actuating the actuator 136 while touching the touch-sensitive display 118 at the location of the designated onscreen item, or other suitable input.

The portable electronic device 100 monitors for and detects input in the input field of the command line 504. The portable electronic device 100 receives input in the form of an input string in the input field of the command line 504 (304). The input string is a text string which grows with each additional character entered via an input device or command entries selected from the command list 512. The input string is dynamic and may be changed by character additions, character deletions (e.g., via backspace key) using input via an input device in the same manner as conventional text entry fields, as well as character changes caused by the selection of a command entry in the command list 512. The input string comprises input sequence delimited (or separated) by delimiter input. The delimiter input, in at least some embodiments, may be a space character for more natural language command presentation. Other delimiter input could be used in other embodiments. Each input sequence corresponds to a command name, command parameter, or a connector linking command parameters.

The portable electronic device 100 disambiguates the input string into a command or number of commands which match the input string (306). Depending on the current input string, the input string may correspond and be disambiguated into (i) one or more commands, (ii) a command and a first command parameter, or (iii) a command, a first command parameter and one or more subsequent command parameters with subsequent command parameters delimited by a connector linking a preceding command parameter and a subsequent command parameter. The connector defines a relationship between the preceding command parameter and the subsequent command parameter. In some embodiments, context information is used when disambiguating the input string in the input field of the command line 504.

The portable electronic device 100 displays each matching command on the display 112 as an entry in the command list 512 (308). As described above, each entry in the command list 512 is selectable in response to selection input, such as a delimiter input (e.g., in the form of a space character). A default command, e.g. a command having the highest predicted likelihood of use, may be highlighted in the command list 512.

The portable electronic device 100 monitors for and detects navigational input (310), and highlights a command in the command list 512 in response to navigational input, for example, detected by the navigation device 122 (312).

The portable electronic device 100 monitors for and detects selection input (314), and selects a highlighted command in the command list in response to selection input (316). The portable electronic device 100 then populates the input field in the command line 504 with the selected command (318).

The portable electronic device 100 monitors for and detects activation input (320), and performs an action in accordance with a command in the command list 512 which is highlighted when activation input is received. The action is performed using an API associated with the command in the command list 512 and its associated application 148. The activation input may be, for example, the actuation of an <ENTER> key of a keyboard of the portable electronic device 100, actuation of the navigation device 122, touching of a designated onscreen item displayed on the touch-sensitive display 118, actuation of the one or more actuators 136 by pressing the touch-sensitive display 118 for example, while touching of a designated onscreen item displayed on the touch-sensitive display 118, or other suitable input.

When activation input is not received, the portable electronic device 100 monitors for and detects input to terminate or close the active command line driven user interface (324). When input to terminate or close the active command line driven user interface is received, the method 300 ends. When input to terminate or close the active command line driven user interface is not received, portable electronic device 100 monitors for and detects new input in the command line 504 (302). The new input may be a character addition or character deletion. Processes 304-322 are then repeated for the new input until input to terminate or close the active command line driven user interface is received.

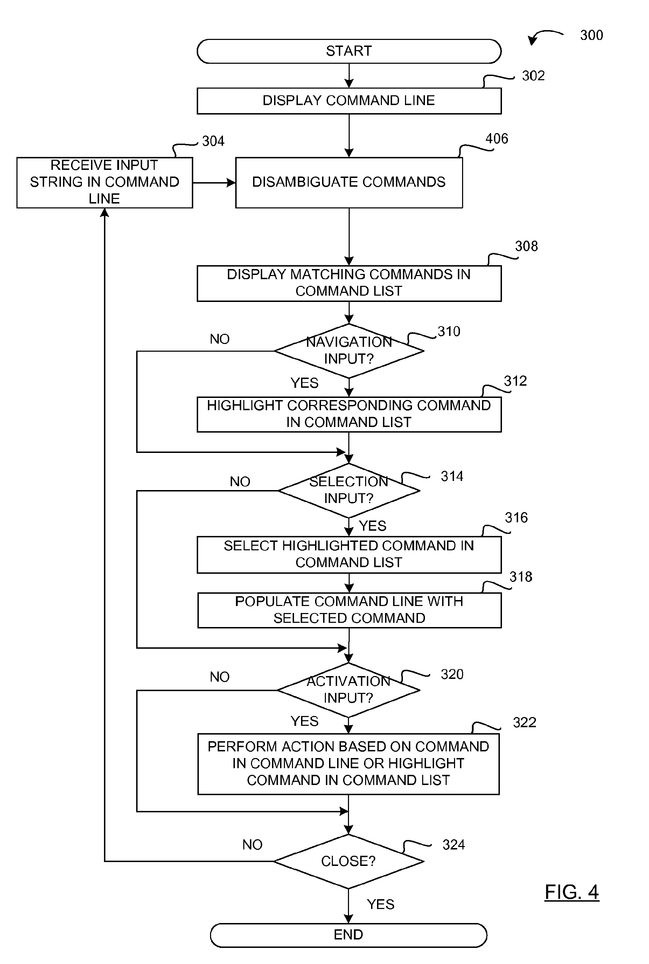

A flowchart illustrating another example embodiment of a method 400 of interacting with a portable electronic device is shown in Figure 4. The method 400 may be carried out by software executed, for example, by the processor 102. Coding of software for carrying out such a method 400 is within the scope of a person of ordinary skill in the art provided the present disclosure. The method 400 may contain additional or fewer processes than shown and/or described, and may be performed in a different order. Computer-readable code executable by at least one processor 102 of the portable electronic device 100 to perform the method 400 may be stored in a computer-readable medium such as the memory 110.

The method 400 is similar to the method 300 except that the active command line driven user interface disambiguates commands in accordance with context information to produce a command or number of commands which match the context information before receiving any input in the command line 504 (406). For example, when the command line 504 is invokable and the context information may comprise an application 148 which was active when the command line was invoked. The disambiguating comprises filtering the commands supported by the command line 504 to commands supported by the application 148. The commands supported by the application 148, or a portion thereof, are displayed in the command list 512.

Alternatively, when the command line 504 is invokable and the context information may comprise selected text in a user interface screen displayed on the display 112 from which the command line 504 was invoked. The disambiguating comprises disambiguating the commands supported by the command line 504 in accordance with the selected text to obtain one or more commands having command parameter which may accept the selected text as a command parameter, and setting a value of the command parameter for each of the one or more commands to be equal to the selected text.

Processes 310 to 324 are then performed based on the commands matching the context information, similar to the method 300 described above. When activation input is not received, the portable electronic device 100 monitors for and detects input to terminate or close the active command line driven user interface (324). When input to terminate or close the active command line driven user interface is received, the method 300 ends. When input to terminate or close the active command line driven user interface is not received, portable electronic device 100 monitors for and detects input in the command line 504 (302). The input may be a character addition or character deletion. Processes 304-322 are then repeated for the input in the same manner as the method 300 until input to terminate or close the active command line driven user interface is received.

While the present disclosure is described primarily in terms of methods, the present disclosure is also directed to a portable electronic device configured to perform at least part of the methods. The portable electronic device may be configured using hardware modules, software modules, a combination of hardware and software modules, or any other suitable manner. The present disclosure is also directed to a pre-recorded storage device or computer-readable medium having computer-readable code stored thereon, the computer-readable code being executable by at least one processor of the portable electronic device for performing at least parts of the described methods.

The present disclosure may be embodied in other specific forms without departing from its spirit or essential characteristics. The described embodiments are to be considered in all respects as being only illustrative and not restrictive. The present disclosure intends to cover and embrace all suitable changes in technology. The scope of the present disclosure is, therefore, described by the appended claims rather than by the foregoing description. All changes that come within the meaning and range of equivalency of the claims are intended to be embraced within their scope.

## Claims

1. A method of interacting with an electronic device, comprising:
displaying on a display of the electronic device a command line having an input field;
receiving an input string in the input field;
disambiguating the input string into one or more commands which match the input string; and
displaying on the display each matching command as an entry in a command list.

2. The method of claim 1, wherein the input string in the input field is disambiguated into one or more commands each having at least a first command parameter.

3. The method of claim 2, wherein the input string includes at least two command parameters, command parameters are delimited by a connector linking a preceding command parameter and a subsequent command parameter.

4. The method of claim 3, wherein commands, command parameters and connectors are each delimited by a space character.

5. The method of claim 3 or claim 4, wherein each connector defines a relationship between the preceding command parameter and the subsequent command parameter.

6. The method of any one of claims 3 to 5, wherein the input string includes a string sequence which matches at least two of possible command parameters and possible connectors, the method further comprises displaying an entry in the command list for each possibility.

7. The method of any one of claims 1 to 6, wherein a command name is disambiguated from multiple command names for each command, the multiple command names comprising a proper command name and one or more command aliases.

8. The method of any one of claims 1 to 7, further comprising:
highlighting a command in the command list in response to a navigational input;
selecting a highlighted command in the command list in response to a selection input; and
populating the input field in the command line with the selected command.

9. The method of any one of claims 1 to 8, further comprising:
performing a highlighted command in the command list when activation input is received.

10. The method of any one of claims 1 to 9, wherein, when the input string in the input field matches a command name, the displayed command list includes an entry comprising the command name and a command parameter syntax for each syntax of the command parameter to be entered.

11. The method of any one of claims 1 to 10, wherein context information is used when disambiguating the input string in the input field.

12. The method of claim 11, wherein
the command line is invokable and the context information comprises selected text in a user interface screen displayed on the display from which the command line was invoked, the disambiguating comprises disambiguating the input string in the input field into one or more commands with the selected text set as a value of a command parameter for each of the one or more commands, or
the command line is invokable and the context information comprises an application which was active when the command line was invoked.

13. The method of claim 12, wherein the disambiguating comprises disambiguating the input string in the input field into one or more commands associated with an application which was active when the command line was invoked.

14. The method of any one of claims 1 to 13, wherein, when multiple commands match the input in the input field, entries in the command list are sorted in a descending order of predicted likelihood of use based on usage statistics stored on the electronic device.

15. The method of any one of claims 1 to 14, further comprising:
when multiple commands match the input in the input field, determining a predicted likelihood of use of each matching command based on usage statistics stored on the electronic device, and automatically selecting the matching command having a highest predicted likelihood of use, or
when multiple commands match the input in the input field, determining a predicted likelihood of use of each matching command based on usage statistics stored on the electronic device, filtering the matching commands in accordance with the predicted likelihood, and displaying only matching commands having a predicted likelihood which exceeds a threshold likelihood in the command list.
